Europäisches Patentamt

European Patent Office

Office européen des brevets

(11) Publication number: **0 007 780**
**A1**

## (12) EUROPEAN PATENT APPLICATION

(21) Application number: **79301437.4**

(22) Date of filing: **19.07.79**

(51) Int. Cl.³: **G 02 B 5/17**
**H 04 B 9/00**

(30) Priority: **20.07.78 GB 3055178**

(43) Date of publication of application:
**06.02.80 Bulletin 80/3**

(84) Designated Contracting States:
**CH DE FR IT NL SE**

(71) Applicant: **THE RANK ORGANISATION LIMITED**
**11 Hill Street**
**London W1X 8AE(GB)**

(72) Inventor: **Cain, Peter Shaun**
**3 Woodside Avenue Wrenthorpe**
**Wakefield West Yorkshire, WF2 0LG(GB)**

(74) Representative: **Cullis, Roger et al,**
**c/o H.G. Amann, Patents Manager 439 Godstone Road**
**Whyteleafe Surrey, CR3 0YG(GB)**

(54) Fibre optic branching coupler.

(57) A fibre optic branching coupler for a fibre optics communications system and which comprises three or more lengths of image conduit (11, Figure I) connected to extend individually between respective pairs of input/output ports (12). These ports are formed by converging the end portions of two or more image conduit lengths so that their faces are juxtaposed in coplanar relationship. The composite end face at each port has an image-splitting centre (13) with which is aligned the optical fibre connected to the port. The term "image conduit" is employed in accordance with convention in the art, as explained in the specification.

Fig 1.

Croydon Printing Company Ltd.

-1-

Fibre Optic Branching Coupler

This invention relates to a fibre optic branching coupler for use in a fibre optic communications system wherein the light signal carried in a single fibre is to be split between two or more information carrying fibres or, conversely, wherein the signals carried in two or more fibres are to be combined into a composite signal to be carried in a single fibre.

Various devices have been proposed for fibre optic coupling in order to split a light signal or combine two or more signals. For example, reference is made to Applied Optics Vol. 15, No. 9, at pages 2031/2, Optics Communications Vol. 17, No. 1, at pages 129-132. These and other known devices either utilise lens and prism system for splitting the light signal or involve the production of delicate structures tailored to one particular fibre diameter in an arrangement suitable for light splitting.

It is an object of the invention to provide a different kind of device for fibre optic coupling.

According to the invention, there is provided a fibre optic branching coupler which comprises three or more lengths of coherent fibre image conduit arranged in fixed relationship so that said lengths individually extend between respective pairs of input/output ports, each input/output port being formed at the junction of the end portions of two or more of the image conduit lengths, which are converged together so that their end faces are juxtaposed in coplanar relationship, the cross-section of the image conduit being such that the said juxtaposed end faces at each port define an image splitting centre with respect to an optical fibre to be connected to the port.

Thus, the invention differs from the prior art in that image conduit is employed to enable the required coupling to be effected. In the present specification and claims, the term "coherent fibre image conduit", sometimes known as "coherent fibre optic rod", is used conventionally, more specifically to refer to a solid conduit or rod-like material which is constituted by a large number of very small individual fibres whose spatial coherence is maintained from the input to the output such that the conduit or rod has the property of transmitting an image from input to output, and vice versa.

In the present invention, the image conduit is used for light splitting to split an image of the incoming fibre, the split images being carried coherently to the output ports. For combining light signals, the image conduit acts to combine the images of two or more incoming fibres.

Various physical arrangements of the branch coupler are possible to suit the many types of coupling which may be required in a fibre optics communication system or optical fibre data bus system.

Furthermore, it is to be appreciated that the coupler may not only be employed when an image of an incoming fibre is to be split equally between two or more output ports, or the signals from two or more incoming fibres are to be equally combined into a single output fibre, but may also be employed when a predetermined unequal or unbalanced image splitting or image combining is required. In the former case, the image-splitting centre at each port will usually coincide with the mechanical centre thereof, the axis

-4-

of the fibre connected to each port being aligned with the image-splitting centre. In the latter case, it is possible to employ lengths of image conduit where end faces are juxtaposed, at least at one of the ports, to define an image splitting centre spaced from the mechanical centre of the port.

When the branch coupler is planar, i.e. the lengths of image conduit are arranged in coplanar relationship, the coupler will usually be constructed of a plurality of lengths of image conduit equal to the number of input/output ports. However, it is possible for the lengths of image conduit to be arranged in non-coplanar relationship, at least one input/output port lying in a plane different to a plane containing at least three other input/output ports.

Preferably, the juxtaposed end faces of the lengths of image conduit at each port form a circular composite face. In this case, the image conduit will have a cross-section constituted by a segment of a circle. In general, therefore, for balanced image splitting or image combining, in a coupler having the same given number of lengths of image conduit brought together at each port, the image conduit can have uniform cross-section constituted by a segment of a circle of angle equal to 360 degrees divided by said given number. For example, one example consists of three lengths of image conduit arranged to form a three port bi-directional coupler, two lengths of image conduit being brought together at each port.

A further aspect of the invention concerns the above-described branching coupler connected in a fibre optics communication system in which an optical fibre is coupled to each input/output port. For balanced image splitting or image combination, the axis of the connected fibre will usually be centred on the image splitting centre of the port.

In the prior art, couplers for use with single fibres have to be specifically designed to be compatible with one diameter of fibre only. In the present invention, because the image conduit operates on the image (or images) of the incoming fibre (or fibres), one branch coupler can be used with any of a wide range of input and output fibre diameters not exceeding the diameter of the ports, provided that in all cases the input and output fibres are aligned with the image splitting centres of the input/output ports.

A practical embodiment of branch coupler in accordance with the invention will now be described with reference to the accompanying drawings, in which:-

Figure 1 diagrammatically shows a planar three port bi-directional branching coupler in accordance with the invention; and

Figure 2 illustrates the use of the coupler in conjunction with input and output fibres of various different diameters.

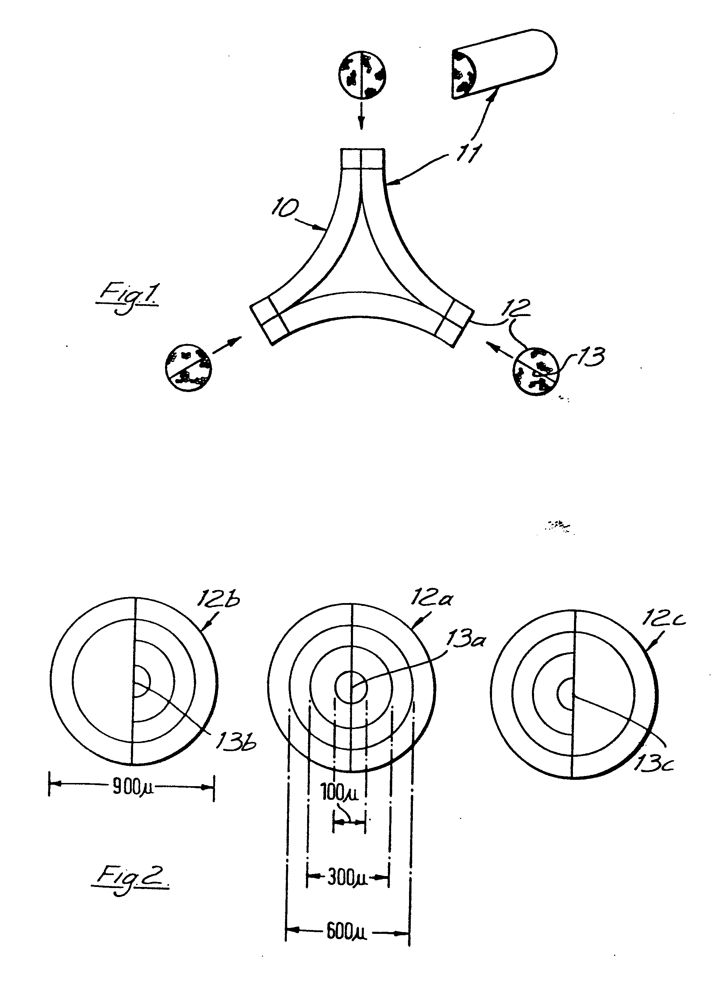

In the branching coupler 10 shown in Figure 1, three lengths of image conduit 11 of semi-circular cross-section are employed. The three lengths of conduit 11 are cemented in fixed relationship in a planar triangle-like formation, providing three inlet/ outlet ports 12, formed by the juxtaposed end faces of the two lengths of conduit which are converged together to form a junction at each port. The juxtaposed semi-circular end faces of the individual pairs of image conduit form a composite circular end face, the centre of which constitutes the image-splitting centre 13 of the port.

In use, the branching coupler is connected in a fibre optics communications system with optical fibres coupled to the respective three ports. At each port, the axis of the optical fibre is aligned with the image splitting centre. Assuming the coupler is employed for splitting a light signal carried in an input fibre connected to one port, the image of the input fibre is split equally between the other two ports, which constitute output ports to which respective output fibres are connected. Each output fibre thus carries away substantially one half of the input signal.

As it is the image of the input fibre which is split, the diameter of the image conduit can be greater than the diameter of the fibres coupled by the coupler. This means that one branching coupler can be employed for a range of fibre diameters, and it is unnecessary to produce numerous couplers specially to suit fibres of differing diameters. The effect of using the coupler with fibres of differing diameters is illustrated in Figure 2. Whatever the diameter of the input fibre, it is centred on the image splitting centre 13a of the input port 12a. The resultant split images of the input fibre are shown at the output ports 12b and 12c, for various indicated diameters of input fibre. The light signal carried by the input fibre will be properly split provided that the output fibres coupled to the output ports 12b and 12c are centred on the image splitting centres 13b and 13c.

The prior art couplers necessitate difficult and expensive microfabrication techniques for their manufacture, whereas the branching coupler of the invention only requires the application of conventional miniature construction techniques which are relatively inexpensive.

It will be appreciated that the arrangement shown in Figure 1 is a particularly simple form of coupler in accordance with the invention. More complex couplers can readily be envisaged, including three dimensional couplers in addition to more complicated planar couplers having four or more ports. In all cases, the cross-section of the image conduit employed is chosen to suit the functional connections to be performed by the coupler to be fabricated, which may sometimes include a predetermined unbalanced image splitting or image combining, the only essential limitation being the requirement to define at each port an image-splitting centre with which an input or output fibre can be connected.

-9-

Claims:

1.  A fibre optic branching coupler which comprises three or more lengths of coherent fibre image conduit arranged in fixed relationship so that said lengths individually extend between respective pairs of input/ output ports, each input/output port being formed at the junction of the end portions of two or more of the image conduit lengths, which are converged together so that their end faces are juxtaposed in coplanar relationship, the cross-section of the image conduit being such that the said juxtaposed end faces at each port define an image splitting centre with respect to an optical fibre to be connected to the port.

2.  A branching coupler according to claim 1, constructed of a plurality of lengths of image conduit equal to the number of input/output ports.

3.  A branching coupler according to claim 2, wherein the lengths of image conduit are arranged in coplanar relationship.

4.  A branching coupler according to claim 1, wherein the lengths of image conduit are arranged in non-coplanar relationship, at least one input/output port lying in a plane different to a plane containing at least three other input/output ports.

5.　A branching coupler according to any one of claims 1 to 4, wherein the image-splitting centre at each port coincides with the mechanical centre thereof.

6.　A branching coupler according to claim 5, wherein the juxtaposed end faces of the lengths of image conduit at each port form a circular composite face.

7.　A branching coupler according to claim 6, wherein the image conduit has a cross-section constituted by a segment of a circle.

8.　A branching coupler according to claim 7, having the same given number of lengths of image conduit brought together at each port, said image conduit having uniform cross-section constituted by a segment of a circle of angle equal to 360 degrees divided by said given number.

9.　A branching coupler according to any one of claims 1 to 8, consisting of three lengths of image conduit arranged to form a three port bi-directional coupler, two lengths of image conduit being brought together at each port.

10.　A branching coupler according to any one of claims 1 to 4, wherein the lengths of image conduit have end faces which are juxtaposed, at least at one of the ports, to define an image-splitting centre spaced from the mechanical centre of the port.

11.　A branching coupler according to any one of claims 1 to 10, connected in a fibre optics communication system in which an optical fibre is coupled to each input/output port.

12.　A branching coupler according to claim 11, wherein the optical fibre connected to each input/output port has its axis centred on the image-splitting centre.

13.　A branching coupler according to claim 11 or claim 12, in which the diameter or diameters of the optical fibre or fibres connected to one or more ports of the branch coupler is or are smaller than the effective diameter of the respective port or ports.

0007780

1/1

Fig.1

11

10

12

13

12b

12a

13a

12c

13b

13c

900μ

100μ

300μ

600μ

Fig.2

European Patent Office

**EUROPEAN SEARCH REPORT**

Application number

EP 79 30 1437

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | FR - A - 2 274 053 (ISE) <br><br> * Claims 1-6; figures 1-4 * <br><br> -- <br><br> ELECTRONICS, vol. 47, nr. 6, 21th March 1974 <br> New York, U.S.A. <br> Anonymous article: "Low-loss coupler feeds 20 terminals", pages 34, 36 <br><br> * Page 34, figures e and b * <br><br> ---- | 1-3,6, 9,11, 13 <br><br><br> 1-3,6, 9,11, 13 | G 02 B 5/17 <br> H 04 B 9/00 |
| | | | **TECHNICAL FIELDS SEARCHED (Int.Cl.³)** <br><br> G 02 B 5/17 <br> H 04 B 9/00 <br> G 02 B 5/14 |
| | | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 31-08-1979 | MALIC |

EPO Form 1503.1 06.78